# NEUE EUROPÄISCHE PATENTSCHRIFT

(11) **EP 3 727 100 B2**
(45) Veröffentlichungstag und Bekanntmachung des Hinweises auf die Entscheidung über den Einspruch: **21.10.2026**
(45) Hinweis auf die Patenterteilung: 07.02.2024
(21) Anmeldenummer: 18745857.5
(22) Anmeldetag: 17.07.2018
(51) Int. Cl.: A47J 27/21, A47J 31/60

(54) **VORRICHTUNG ZUM FILTERN VON TRINKWASSER**
DEVICE FOR FILTRATION OF POTABLE WATER
DISPOSITIF POUR FILTRER L'EAU POTABLE

(30) Priorität: 21.12.2017 DE 102017130857
(43) Veröffentlichungstag der Anmeldung: 28.10.2020
(73) Patentinhaber: BWT Holding GmbH, 5310 Mondsee (AT)
(72) Erfinder: ROHDE, Florian, 65191 Wiesbaden (DE)
(74) Vertreter: Friderichs, Gunther
(86) Internationale Anmeldenummer: PCT/EP2018/069371
(87) Internationale Veröffentlichungsnummer: WO 2019/120641

(56) Entgegenhaltungen:
- EP-A1- 1 028 090
- EP-A1- 1 028 090
- EP-A2- 0 370 400
- EP-B1- 1 915 930
- CN-A- 107 374 345
- CN-A- 107 374 345
- CN-Y- 201 379 420
- DE-A1- 2 335 811
- DE-T2- 60 030 455
- DE-T2- 60 030 455
- DE-T2- 60 030 455
- DE-U1- 202007 010 955
- DE-U1- 202007 010 955
- DE-U1- 202009 011 966
- DE-U1- 8 810 770
- JP-B2- 5 862 859
- US-A- 3 561 506
- US-A1- 2004 134 932
- US-A1- 2004 134 932
- US-A1- 2009 014 366
- US-A1- 2009 014 366
- US-B1- 6 202 541
- ANONYMOUS: "Tristar cm 1237 Coffee Machine : Amazon.de: Home & Kitchen", 26 May 2015 (2015-05-26), pages 1 - 8, XP055834176, Retrieved from the Internet <URL:https://www.amazon.de/-/en/CM-1237-Tristar-cm-1237-Coffee-Machine/dp/B00UYF9DVI/ref=sr_1_3?dchild=1&keywords=kaffeemaschine+mit+tropfstopp&qid=1629736469&sr=8-3&th=1> [retrieved on 20210823]
- WHOLE LATTE LOVE: "Bodum Bistro Thermal Carafe Drip Coffee Maker: What's Brewing #37", 21 November 2012 (2012-11-21), XP093093407, Retrieved from the Internet <URL:https://www.youtube.com/watch?v=-FV4WF1LL3k> [retrieved on 20231020]
- ANONYMOUS: "Bodum BISTRO Coffee Maker, Automatic Pour Over Coffee Machine with Thermal Carafe, Black, 40 Ounce", 2 May 2016 (2016-05-02), pages 1 - 8, XP093093566, Retrieved from the Internet <URL:https://www.amazon.com/BodumBISTRO-Automatic-Machine-Thermal/dp/B01ACLVWI0> [retrieved on 20231020]
- Screenshots Wayback Machine zu E6 vom 27.11.2012: URL: http://web.ar chive.org/web/20121127101954/https://www.youtube.com/watch?v=- FV4WF1LL3k
- "Bodum: Gebrauchsanweisung Bodum Bistro Coffee Maker", BODUM, 1 November 2011 (2011-11-01), XP093235486, Retrieved from the Internet <URL:https://m.media-amazon.com/images/I/A1kEtDLb1gL.pdf>

## Beschreibung

### Gebiet der Erfindung

Die Erfindung betrifft eine Vorrichtung zum Filtern von Trinkwasser. Insbesondere betrifft die Erfindung eine schwerkraftbetriebene Wasserfiltervorrichtung, wie sie im Haushalt verwendet wird.

### Hintergrund der Erfindung

Vorrichtungen zum Filtern von Trinkwasser sind insbesondere als sogenannte Tischwasserfilter bekannt. Aus der Praxis bekannte Tischwasserfilter bestehen zumeist aus einer Kanne mit einem Trichter. In den Trichter dichtend eingesetzt ist eine Filterkartusche. Diese kann je nach Ausführungsform ein Ionenaustauschermaterial, Aktivkohle und/oder Filter zum Entfernen von Schwebstoffen enthalten. Das Wasser kann vom Benutzer eingefüllt werden und durchläuft schwerkraftbetrieben die Filterkartusche, um im Wassersammelraum aufgefangen zu werden.

Nachteilig an derartigen aus der Praxis bekannten Tischwasserfiltern ist, dass diese in Relation zum Wassersammelraum relativ groß ausgebildet sind. So hat ein Tischwasserfilter naturgemäß aufgrund des Volumens des Trichters mindestens das doppelte Volumen wie der Wassersammelraum.

Dies führt dazu, dass bekannte Tischwasserfilter recht unhandlich ausgebildet sind, was insbesondere deren Aufbewahrung im Kühlschrank erschwert. Des Weiteren ist die Designfreiheit der für den Tischwasserfilter verwendeten Kanne recht gering, da diese notwendigerweise mit einem Trichter versehen sein muss.

Das Dokument EP 1 527 720 B1 zeigt einen Wasserkocher mit einem Aufsatz, in den eine Filterkartusche eingesetzt ist. Über den Aufsatz kann der Wasserkocher mit aufbereitetem Trinkwasser befüllt werden. Nachteilig an diesem Wasserkocher ist die relativ umständliche Handhabung des Aufsatzes. So müssen Aufsatz und Wasserkocher voneinander getrennt werden, um den Wasserkocher bequem verwenden zu können.

Wasserbehandlungseinrichtungen sind aus den Dokumenten CN 107 374 345 A, US 2004/134932 A1, US 2009/014366 A1, DE 20 2007 010955 U1, DE 600 30 455 T2 und EP 1 028 090 A1 bekannt.

### Aufgabe der Erfindung

Der Erfindung liegt demgegenüber die Aufgabe zugrunde, eine Vorrichtung zum Filtern von Trinkwasser bereit zu stellen, welche vom Benutzer einfach und bequem zu handhaben ist.

### Zusammenfassung der Erfindung

Die Aufgabe der Erfindung wird bereits durch eine Vorrichtung zum Filtern von Trinkwasser nach einem der unabhängigen Ansprüche gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft eine Vorrichtung zum Filtern von Trinkwasser. Die erfindungsgemäße Vorrichtung ist insbesondere als Tischwasserfilter zur Verwendung im Haushaltsbereich ausgebildet.

Die Vorrichtung umfasst eine Basisstation mit einem Wasseraufnahmebehälter, wobei in den Wasseraufnahmebehälter eine Filterkartusche einsetzbar ist.

Der Wasseraufnahmebehälter ist zumindest abschnittsweise als Trichter ausgebildet, in welchen eine Filterkartusche dichtend eingesetzt ist. Eingefüllt in den Wasseraufnahmebehälter durchläuft das aufzubereitende Trinkwasser so allein schwerkraftbetrieben die Filterkartusche.

Die Filterkartusche kann insbesondere mit einem Ionenaustauschermaterial und/oder mit Aktivkohle befüllt sein. Derartige Filterkartuschen sind insbesondere als Einwegkartuschen ausgebildet und werden regelmäßig ausgetauscht.

Unterhalb des Wasseraufnahmebehälters ist ein Wassersammelbehälter auf eine Standfläche der Basisstation aufsetzbar.

Die Erfindung beruht also auf dem Prinzip, dass die Vorrichtung zum Filtern von Trinkwasser aus einer stationären Basisstation und einem mobilen Wasseraufnahmebehälter besteht, welcher in die Basisstation einsetzbar ist.

Der Wassersammelbehälter kann so beliebig, beispielsweise als Kanne oder Karaffe, ausgestaltet sein. Weiter dient der Wassersammelbehälter lediglich der Aufbewahrung des aufbereiteten Wassers und muss daher nicht das Volumen des Trichters, in den die Filterkartusche eingesetzt wird, aufnehmen. So kann der Wassersammelbehälter kompakt ausgebildet sein.

Die Basisstation umfasst gleichzeitig die Standfläche für den Wassersammelbehälter sowie den Wasseraufnahmebehälter und kann daher, beispielsweise in der Küche, stationär aufgestellt werden, wobei lediglich der Wassersammelbehälter nach Aufbereitung des Trinkwassers entnommen werden muss.

Gemäß der Erfindung ist der Wasseraufnahmebehälter mit einem Ventil verschließbar, welches durch Einsetzen des Wassersammelbehälters geöffnet wird.

So ist sichergestellt, dass nicht versehentlich bei Befüllung des Wasseraufnahmebehälters, ohne dass ein Wassersammelbehälter darunter steht, Wasser unkontrolliert austritt.

Das Ventil kann insbesondere von einem Deckel des Wassersammelbehälters beim Einsetzen geöffnet werden.

Gemäß der Erfindung ist der Wasseraufnahmebehälter von der Basisstation abnehmbar. Der Wasseraufnahmebehälter ist, einschließlich des Ventils, eigenständige, abnehmbare Komponente, welche einen Griff aufweist, mittels dessen der Benutzer den Wasseraufnahmebehälter abnehmen und beispielsweise am Wasserhahn befüllen kann.

Der Wasseraufnahmebehälter hat eine eigene Standfläche, kann also, um diesen zwischenzulagern, hingestellt werden, ohne dass das Ventil geöffnet wird.

Gemäß der Erfindung weist die Basisstation eine Seitenwand mit zumindest einer Aussparung auf, durch welche der Wassersammelbehälter einsetzbar ist. Sofern der Wassersammelbehälter als Wasserkocher ausgebildet ist, wird dieser vorzugsweise von einer Seite her eingesetzt, die einem elektrischen Anschlusskabel gegenüberliegt.

Die Basisstation kann auch zwei Aussparungen in der Seitenwand aufweisen, wobei der Wassersammelbehälter aus zwei verschiedenen Richtungen in die Basisstation einsetzbar ist.

Die Basisstation, insbesondere ein Unterteil der Basisstation, ist so auf einfache Weise standfest und robust ausgebildet.

Bei einer Weiterbildung der Erfindung ist der Wassersammelbehälter als Wasserkocher ausgebildet und die Basisstation weist einen Elektroanschluss für den Wasserkocher auf.

Die elektrische Verbindung befindet sich insbesondere zwischen dem Boden des Wasserkochers und der Standfläche oder zwischen einer Seitenwand des Wasserkochers und der Basisstation. So wird der Wasserkocher automatisch beim Aufsetzen kontaktiert. Derartige elektrische Verbindungen zum Verbinden eines Wasserkochers mit dem Stromnetz sind aus der Praxis bekannt.

Vorzugsweise ist die elektrische Verbindung zwischen Wasserkocher und Elektroanschluss derart ausgebildet, dass der Wasserkocher durch eine horizontale Bewegung mit dem Elektroanschluss verbunden wird. Insbesondere wird der Wasserkocher auf eine Schiene mit elektrischen Kontakten geschoben oder der Wasserkocher wird beim Einschieben in die Basisstation von einer Seite her kontaktiert. Der Wasserkocher kann so auf einfache Weise durch seitliches Einschieben das Ventil zum Öffnen des Wasseraufnahmebehälters betätigen.

Es ist insbesondere vorgesehen, dass der Elektroanschluss Teil eines in die Basisstation einsetzbaren Einsatzes ist. So kann ein flexibel verwendbares System geschaffen werden, welches auch im Nachhinein um die Funktion eines Wasserkochers ergänzt werden kann. Dabei ist insbesondere vorgesehen, dass der Einsatz anstelle des ansonsten verwendeten Wassersammelbehälters auf die Standfläche der Basisstation aufgesetzt wird.

Insbesondere ist der Einsatz als auf die Standfläche aufsetzbare Platte ausgebildet, wobei vorzugsweise die Platte formschlüssig zumindest in einer Horizontalebene gehalten wird, insbesondere von der oder den Seitenwänden eines Unterteils der Basisstation.

Die Standfläche kann insbesondere als Einsenkung der Oberfläche ausgebildet sein. In Verwendung mit einem Wassersammelbehälter, welcher nicht als Wasserkocher ausgebildet ist, kann die Einsenkung dem formschlüssigen Halten des Wassersammelbehälters dienen.

Gemäß einer weiteren Ausführungsform der Erfindung ist zwischen Wasseraufnahmebehälter und Wassersammelbehälter ein Durchlauferhitzer und/oder ein Wasserkühler angeordnet.

Dieser Aspekt bezieht sich also auf ein System, bei welchem das aufzubereitende Trinkwasser aus dem Wassersammelbehälter die Filterkartusche passiert, sodann durch einen Durchlauferhitzer und/oder Wasserkühler läuft und sich danach im Wassersammelbehälter sammelt.

Es ist insbesondere vorgesehen, dass der Durchlauferhitzer in der Basisstation integriert ist. Vorzugsweise wird zum Einfüllen von Wasser nur der Wassersammelbehälter abgehoben und der Durchlauferhitzer und/oder Wasserkühler verbleibt in der stationären Basisstation.

So lässt sich eine kompakte Anordnung bereitstellen, bei welcher insbesondere eine besonders schnelle Erwärmung oder Kühlung des aufbereiteten Wassers ermöglicht wird, da dieses bereits beim Auslaufen erwärmt wird.

Das Anschlusskabel befindet sich vorzugsweise an der Basisstation, insbesondere an dem Unterteil der Basisstation. So muss das Kabel beim Abnehmen des Wassersammelbehälters nicht mitgeführt werden.

Vorzugsweise ist sowohl ein Ventil zwischen Wasseraufnahmebehälter und Durchlauferhitzer bzw. Wasserkühler vorgesehen, welches sich öffnet, wenn der Wassersammelbehälter aufgesetzt wird, als auch ein Ventil zwischen Durchlauferhitzer bzw. Wasserkühler und Wassersammelbehälter vorgesehen, welches sich öffnet, wenn der Wassersammelbehälter eingesetzt wird.

Gemäß einer Ausführungsform der Erfindung wird der Durchlauferhitzer über einen Schalter an- und ausgeschaltet und hält im angeschalteten Zustand das Wasser in einem bauartbedingt vorgegebenen Temperaturbereich. So steht bereits unmittelbar mit dem Einsetzen des Wassersammelbehälters heißes Wasser zur Verfügung.

Gemäß einer anderen Ausführungsform der Erfindung wird der Durchlauferhitzer mit dem Einsetzen des Wassersammelbehälters eingeschaltet. Bei einem Durchlauferhitzer steht in der Regel schon bereits kurz nach dem Einschalten heißes Wasser zur Verfügung und es wird so nur Strom zum Erhitzen des Wassers benötigt, wenn auch tatsächlich Wasser entnommen wird.

Das Einschalten des Durchlauferhitzers kann beispielsweise durch einen im Durchlauferhitzer angeordneten Magnetschalter, insbesondere ein Reed-Relais, erfolgen. Hierzu kann der Wassersammelbehälter oder ein vom Wassersammelbehälter beim Einsetzen betätigtes Bauelement, wie beispielsweise ein als Auslaufstopp dienendes Ventil, einen Magneten oder einen ferromagnetischen Abschnitt umfassen, über den der Schalter betätigt wird.

Die Erfindung betrifft des Weiteren ein Set, welches die vorstehend beschriebene Vorrichtung sowie zumindest einen Wassersammelbehälter umfasst.

Insbesondere betrifft die Erfindung ein Set, welches zumindest zwei verschiedene Wassersammelbehälter umfasst.

Ein Wassersammelbehälter kann dabei als Karaffe, insbesondere als Glaskaraffe, ausgebildet sein. Dies kann insbesondere dem Servieren von Trinkwasser direkt am Tisch dienen.

Ein anderer Wasserbehälter ist dagegen als Kanne mit einem Griff ausgebildet. Die Kanne kann ein größeres oder auch gleich großes Innenvolumen wie die Karaffe aufweisen und kann für andere Anwendungen, beispielsweise zum Blumen gießen oder zum Befüllen von Geräten zur Heißgetränkezubereitung, wie Kaffeemaschinen, verwendet werden.

Weiter kann das Set einen Wasserkocher sowie einen in die Basisstation einsetzbaren Einsatz mit einem Elektroanschluss für den Wasserkocher umfassen.

### Kurzbeschreibung der Zeichnungen

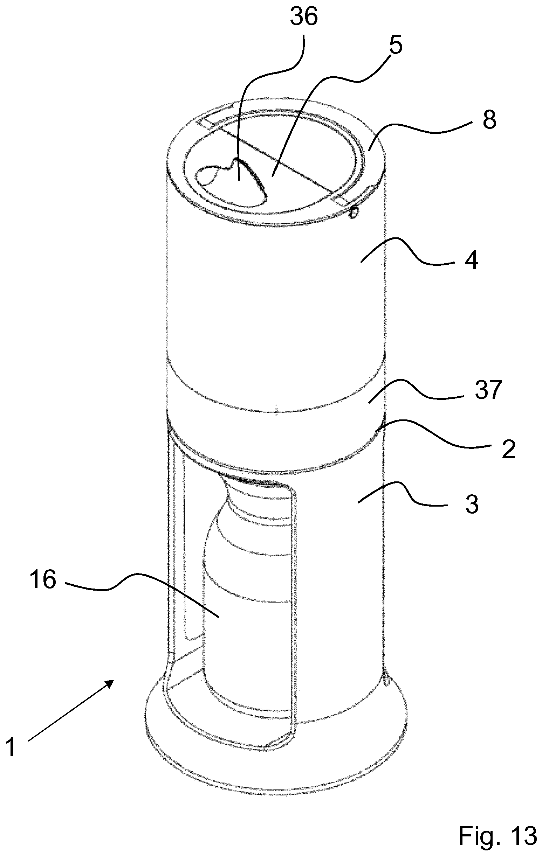

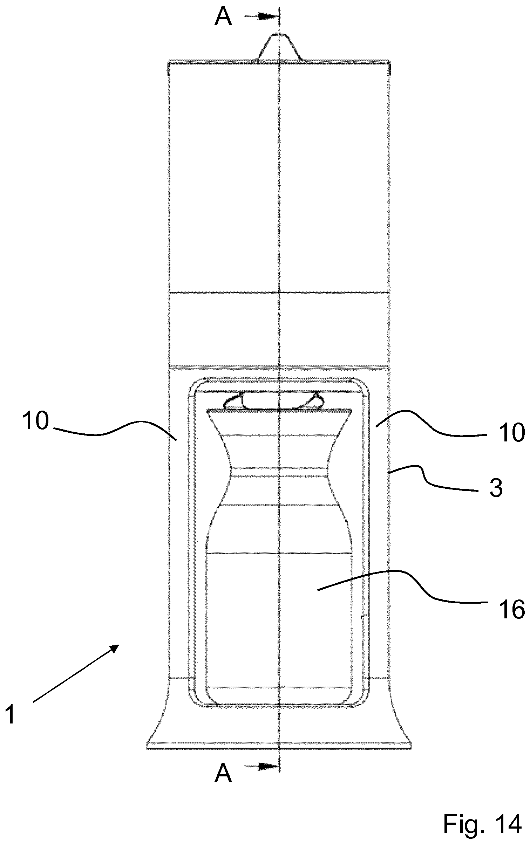

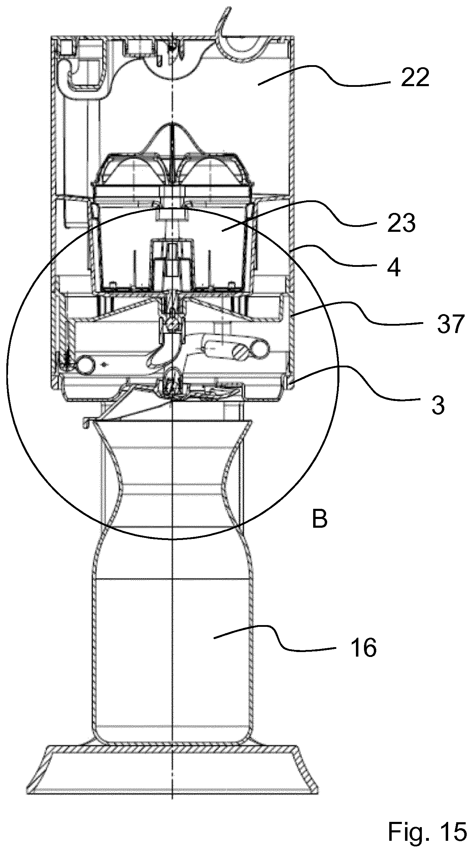

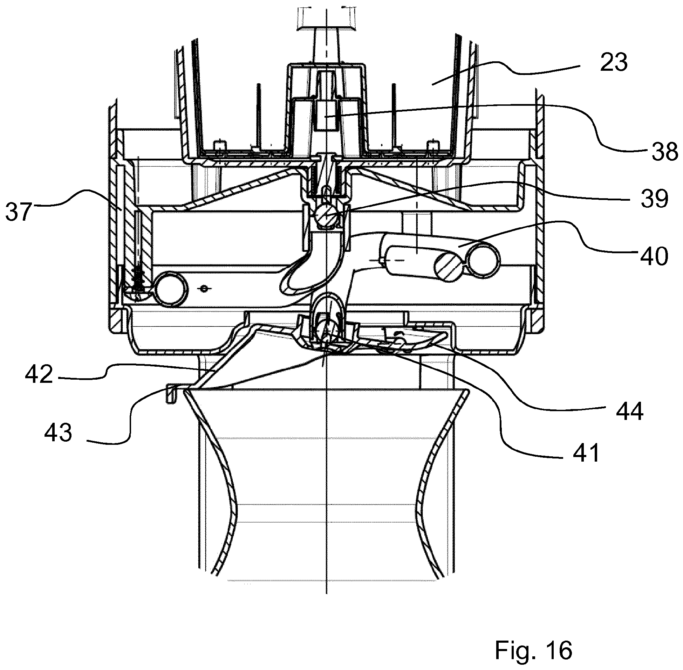

Der Gegenstand der Erfindung soll im Folgenden bezugnehmend auf die Zeichnungen Fig. 1 bis Fig. 17 anhand eines Ausführungsbeispiels näher erläutert werden.
Fig. 1 ist eine perspektivische Ansicht eines Ausführungsbeispiels einer erfindungsgemäßen Vorrichtung zum Filtern von Trinkwasser.
Fig. 2 sowie Fig. 3a und Fig. 3b zeigen perspektivische Ansichten von zwei verschiedenen Wassersammelbehältern, die für die in Fig. 1 dargestellte Vorrichtung verwendet werden können.
Fig. 4 zeigt, wie eine Karaffe in die Vorrichtung zum Filtern von Trinkwasser eingesetzt ist.
Fig. 5 ist eine Detailansicht, welche das Ventil mit dem Auslauf zeigt.
Fig. 6 zeigt, wie der Wasseraufnahmebehälter von der Vorrichtung zum Filtern von Trinkwasser abgenommen werden kann.
Fig. 7 ist eine Schnittansicht der in Fig. 8 dargestellten Vorrichtung zum Filtern von Trinkwasser.
Fig. 8 ist eine perspektivische Ansicht der Vorrichtung ohne eingesetzten Wasseraufnahmebehälter.
Fig. 9 zeigt, wie eine als Wasserkocher ausgebildete Kanne in die Vorrichtung zum Filtern von Trinkwasser eingesetzt ist.
Fig. 10 zeigt in einer perspektivischen Ansicht den auf einen Einsatz aufgesetzten Wasserkocher.
Fig. 11 zeigt den Einsatz und Fig. 12 den Wasserkocher.
Bezugnehmend auf Fig. 13 bis Fig. 16 soll eine weitere Ausführungsform der Erfindung erläutert werden, bei welcher zwischen Wasseraufnahmebehälter und Wassersammelbehälter ein elektrischer Durchlauferhitzer angeordnet ist. Fig. 13 zeigt eine perspektivische Ansicht, Fig. 14 eine Seitenansicht, Fig. 15 ist eine Schnittansicht und Fig. 16 eine Detaildarstellung.

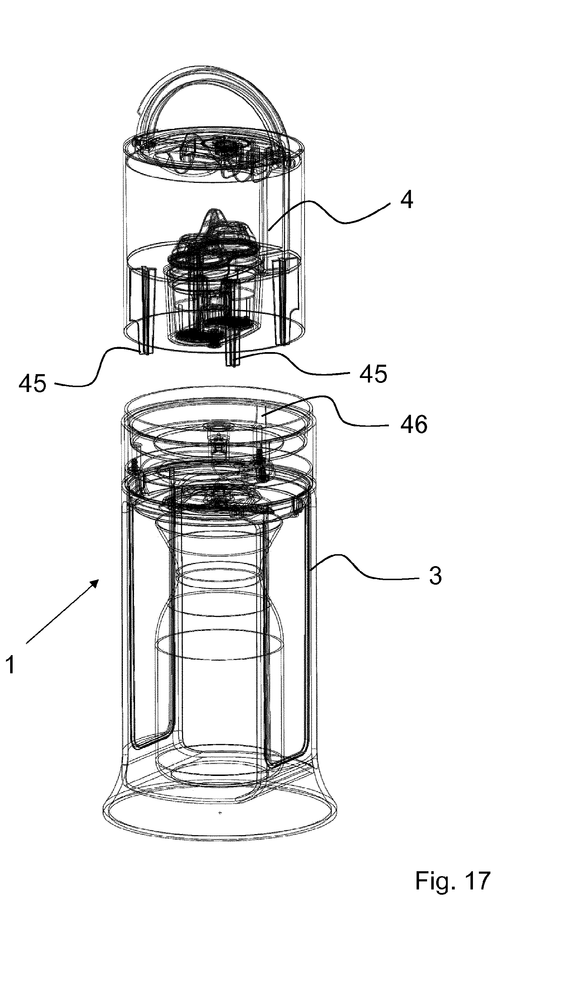

Fig. 17 ist eine Drahtdarstellung der Vorrichtung mit abgenommenem Wasseraufnahmebehälter.

### Detaillierte Beschreibung der Zeichnungen

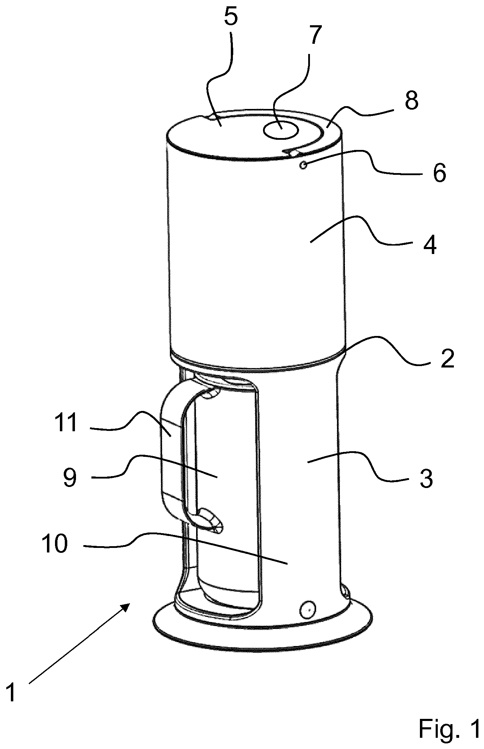

Fig. 1 ist eine perspektivische Ansicht eines Ausführungsbeispiels einer Vorrichtung 1 zum Filtern von Trinkwasser.

Die Vorrichtung 1 zum Filtern von Trinkwasser umfasst eine Basisstation 2, in die als Wassersammelbehälter eine Kanne 9 mit einem Griff 11 eingesetzt ist.

Die Basisstation 2 besteht aus einem Unterteil 3, auf welches der Wasseraufnahmebehälter 4 aufgesetzt ist.

Unterteil 3 und Wasseraufnahmebehälter 4 sind in dieser Ausführungsform im Wesentlichen zylindrisch, insbesondere kreiszylindrisch, ausgebildet.

Der Wasseraufnahmebehälter 4 dient der Aufnahme des aufzubereitenden Wassers und umfasst einen Deckel 5. Der Deckel 5 kann zum Befüllen des Wassersammelbehälters abgenommen werden.

Weiter umfasst der Wasseraufnahmebehälter 4 einen über die Scharniere 6 hochklappbaren Griff 8, mit welchem der Wasseraufnahmebehälter 4 vom Unterteil 3 der Basisstation 2 abgenommen werden kann, um befüllt zu werden.

Um die Kanne 9 bequem einzusetzen, umfasst die Seitenwand 10 des Unterteils 3 zumindest eine, vorzugsweise zwei Aussparungen, durch welche die Kanne 9 von der Seite her eingesetzt werden kann, wobei die Basisstation 2 stationär am Aufstellort verbleiben kann.

Weiter kann die Vorrichtung zum Filtern von Trinkwasser eine elektronische Wechselanzeige 7 umfassen, welche in diesem Ausführungsbeispiel in den Deckel 5 des Wasseraufnahmebehälters 4 integriert ist.

Die Wechselanzeige 7 signalisiert einen notwendigen Austausch der Filterkartusche. Dies kann insbesondere zeitbasiert erfolgen. Derartige Wechselanzeigen sind aus der Praxis bekannt.

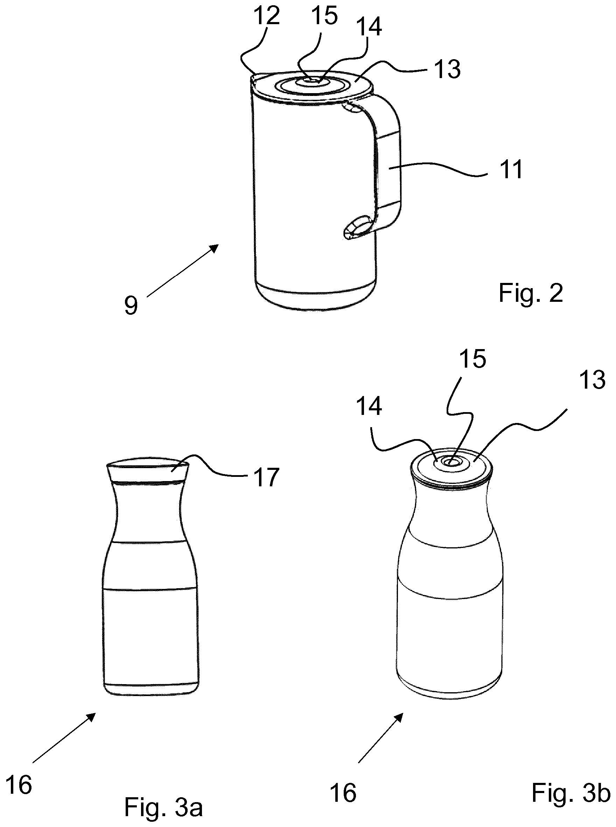

Fig. 2 ist eine perspektivische Ansicht der bereits in Fig. 1 dargestellten Kanne 9.

Die Kanne 9 ist in dieser Ausführungsform im Wesentlichen zylindrisch ausgebildet.

Die Kanne 9 umfasst den Griff 11 und die Ausgießtülle 12.

Weiter umfasst die Kanne 9 einen Deckel 13. Der Deckel 13 umfasst einen vorzugsweise zentralen Vorsprung 14. Der Vorsprung 14 ist vorzugsweise konisch aus der angrenzenden Oberseite des Deckels 13 hervorragend ausgebildet und dient dem Öffnen eines Ventils des Wasseraufnahmebehälters.

Im Vorsprung 14 befindet sich eine Öffnung 15, durch die das aufbereitete Wasser aus dem Wasseraufnahmebehälter in die Kanne 9 fließen kann.

Fig. 3a und Fig. 3b sind perspektivische Ansichten einer Karaffe, welche alternativ statt der in Fig. 2 dargestellten Kanne verwendet werden kann.

In diesem Ausführungsbeispiel ist, wie in Fig. 3 dargestellt, die Karaffe 16 als Glaskaraffe ausgebildet und umfasst eine Kappe 17, mit welcher die Karaffe 16 verschlossen werden kann.

Fig. 3b zeigt die Karaffe 16, bei welcher nunmehr die Kappe abgenommen ist.

Zu erkennen ist, dass auch die Karaffe 16 einen Deckel 13 mit einem Vorsprung 14 aufweist, welcher eine Öffnung 15 umfasst, durch die aufbereitetes Wasser in die Karaffe 16 fließen kann.

Der Deckel 13 der Karaffe 16 hat einen kleineren Durchmesser als der Deckel der Kanne (13 in Fig. 2). Die Karaffe 16 hat so einen schmaleren Hals, an welchem diese auch ohne Griff bequem gefasst werden kann. Insbesondere hat der Deckel 13 einen gegenüber dem maximalen Durchmesser der Karaffe 16 kleinen Durchmesser.

Die Karaffe 16 ist so formschön, vorzugsweise aus Glas, ausgebildet und dient dem Servieren des aufbereiteten Wassers direkt am Tisch.

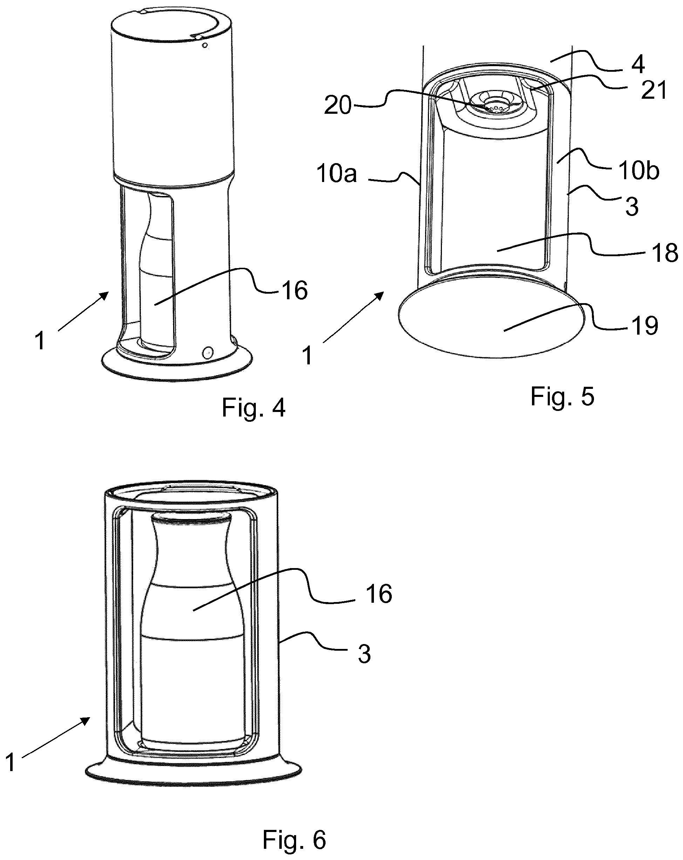

Fig. 4 zeigt in einer perspektivischen Ansicht, wie anstelle der Kanne die Karaffe 16 in die Vorrichtung 1 zum Filtern von Trinkwasser eingesetzt ist.

Fig. 5 ist eine Detailansicht der Vorrichtung zum Filtern von Trinkwasser 1, wobei nunmehr kein Wassersammelbehälter eingesetzt ist.

Zu erkennen ist, dass aus dem Boden 21 des Wasseraufnahmebehälters 4 ein Ventil 20 herausragt, welches gleichzeitig als Auslauf dient.

Wird das vorzugsweise vorne konisch ausgebildete Ventil 20 durch Einsetzen des Wassersammelbehälters, insbesondere durch den Vorsprung des Deckels des Wassersammelbehälters (14 in Fig. 2, 3a und 3b) hochgedrückt, so kann Wasser aus dem Wasseraufnahmebehälter 4 austreten und in den Wassersammelbehälter fließen. Das Wasser fließt dann in diesem Ausführungsbeispiel aus den ringförmig angeordneten Öffnungen des Ventils 20

Weiter zu erkennen ist in dieser Ansicht die Standfläche 19, mit welcher die Basisstation 1 stationär auf einer Fläche aufgestellt sein kann. Die Vorrichtung 1 zum Aufbereiten von Trinkwasser hat in dieser Ausführungsform einen verbreiterten Standfuß.

Im aufgestellten Zustand kann durch die Aussparung 18 von beiden Seiten her ein Wassersammelbehälter in die Basisstation eingesetzt werden.

Weiter zu erkennen ist, dass sich die Seitenwand des Unterteils 3 in zwei gegenüberliegende Abschnitte 10a und 10b unterteilt.

Oberhalb der Aussparung 18 ist das Gehäuse des Unterteils 3 wiederum umlaufend geschlossen und dient als Standfläche für den Wasseraufnahmebehälter 4.

Fig. 6 zeigt in einer perspektivischen Ansicht, wie nunmehr der Wasseraufnahmebehälter vom Unterteil 3 abgenommen ist. Der Wasseraufnahmebehälter kann so mobil zu einem Wasserhahn verbracht, befüllt und wieder aufgesetzt werden, um die Karaffe 16, welche im Unterteil 3 der Basisstation angeordnet ist, zu befüllen.

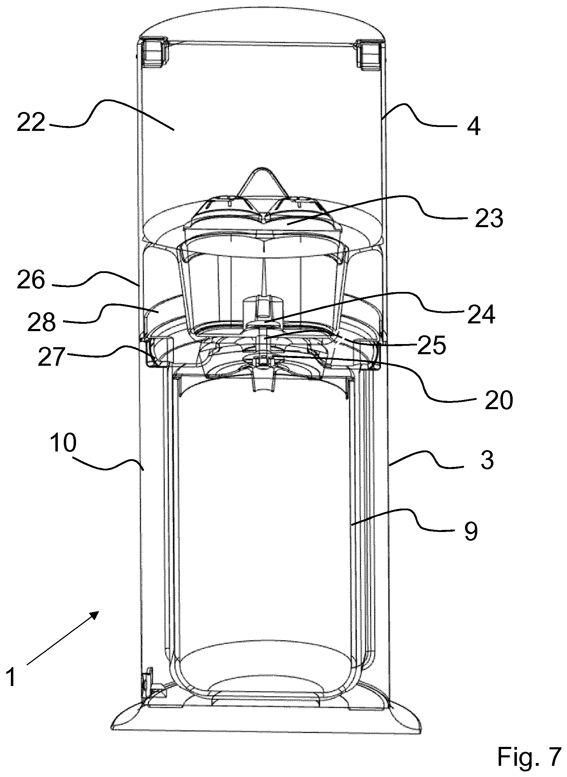

Fig. 7 ist eine Schnittansicht der in Fig. 1 dargestellten Vorrichtung 1 zum Filtern von Trinkwasser.

Der Wasseraufnahmebehälter 4 umfasst ein Innenvolumen 22, welches der Aufnahme des aufzubereitenden Trinkwassers dient.

Der Wasseraufnahmebehälter 4 ist zumindest abschnittsweise als Trichter ausgebildet. Eingesetzt in diesen Trichter ist dichtend die Filterkartusche 23, welche schwerkraftbetrieben vom aufzubereitenden Wasser durchströmt wird.

Das aufzubereitende Wasser läuft so vom Innenvolumen 22 über den Kanal 25 in die Kanne 9.

Weiter in der Schnittansicht ist das Ventil 20 zu erkennen.

Das Ventil 20 umfasst den Ventilkörper 24, über den beim Anheben des Ventils 20 durch Einsetzen der Kanne der Kanal 25 geöffnet wird, so dass Wasser aus dem Wasseraufnahmebehälter 4 in den Wassersammelbehälter fließen kann.

Der Wasseraufnahmebehälter 4 umfasst eine Seitenwand 26, welche sich auch unterhalb des Innenvolumens zum Aufnehmen von aufzubereitendem Trinkwasser in Richtung des Unterteils 3 erstreckt.

Weiter umfasst der Wasseraufnahmebehälter 4 ein Bodenstück 28, welches als Standfuß 27 ausgebildet ist.

Das Bodenstück 28 ist mittig eingesenkt. In dieser Einsenkung befindet sich das Ventil 20. So wird das Ventil 20, auch wenn der Wasseraufnahmebehälter 4 mit dem Standfuß 27 auf eine Fläche gesetzt ist, nicht geöffnet.

Der Wasseraufnahmebehälter 4 kann so bequem vom Unterteil 3 abgenommen und auch temporär allein aufgestellt werden, ohne dass Wasser austritt.

Beim Aufsetzen ist der Standfuß 27 als Formschluss- und Zentrierelement im Unterteil wirksam. Dementsprechend hat der Standfuß 27 einen kleineren Außendurchmesser als das angrenzende Unterteil 4 und greift im aufgesetzten Zustand in das Unterteil 4 ein.

Die Seitenwand 26 fluchtet in diesem Ausführungsbeispiel mit der Seitenwand 10 des Unterteils 3.

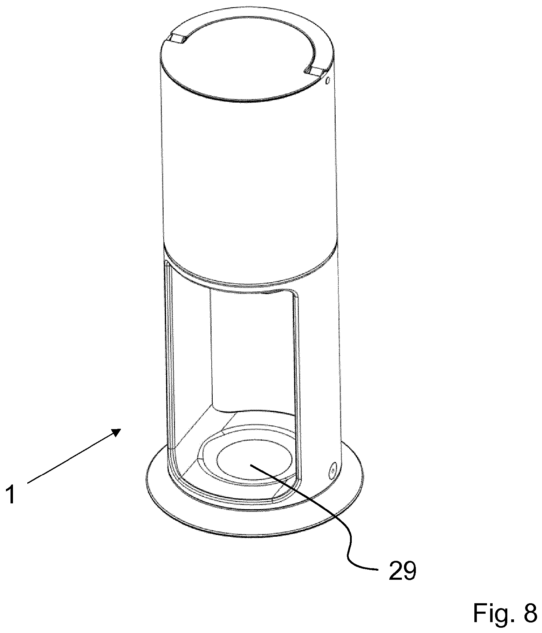

Fig. 8 zeigt in einer perspektivischen Ansicht die Vorrichtung 1 zum Filtern von Trinkwasser, ohne dass ein Wassersammelbehälter eingesetzt ist.

Zu erkennen ist in dieser Ansicht die Standfläche 29 für einen Wassersammelbehälter, welche als Einsenkung mit abgeschrägtem Rand ausgebildet ist. Der eingesetzte Wassersammelbehälter wird so formschlüssig gehalten.

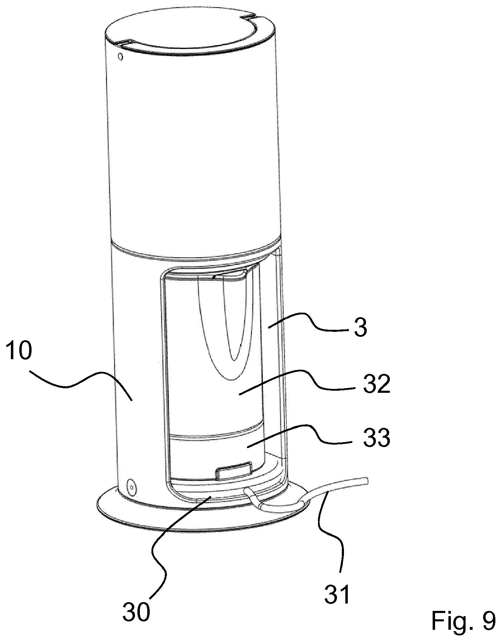

Fig. 9 zeigt in einer perspektivischen Ansicht, wie nunmehr ein Wasserkocher in die Vorrichtung 1 zum Filtern von Trinkwasser eingesetzt ist.

Hierzu ist ein Einsatz 30 mit einer elektrischen Anschlussleitung 31 vorgesehen, welcher auf die in Fig. 8 dargestellte Standfläche (29) aufgesetzt wird.

Auf diesen Einsatz 30 wiederum ist ein Wasserkocher 32, in diesem Ausführungsbeispiel als Kanne mit einem Griff ausgestaltet, aufgesetzt.

Der Wasserkocher 32 umfasst einen Sockel 33, welcher ein Heizelement (nicht dargestellt) umfasst.

Der Wasserkocher 32 nebst Einsatz 30 kann als modulare Komponente bereitgestellt werden, d.h. es ist insbesondere möglich, den Einsatz, welcher ein hier nicht zu sehendes Formschlusselement für die Standfläche (29 in Fig. 8) aufweist, zusammen mit dem Wasserkocher 32 nachzukaufen und in die Vorrichtung zum Filtern von Trinkwasser einzusetzen.

Ein Schalter zu Ein- und Ausschalten (nicht dargestellt) kann sich sowohl am Wasserkocher 32, als auch am Einsatz 30 befinden.

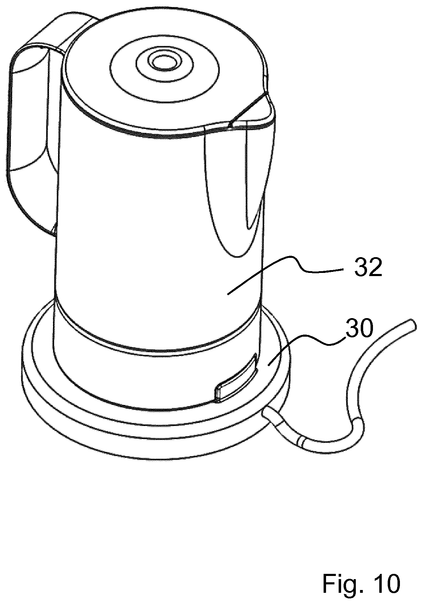

Fig. 10 zeigt in einer perspektivischen Ansicht den Wasserkocher 32 zusammen mit dem Einsatz 30, welcher beispielsweise als Nachkaufset für die erfindungsgemäße Vorrichtung zum Filtern von Trinkwasser angeboten werden kann.

Wie vorstehend beschrieben, wird dabei der Einsatz 30 auf die Standfläche des Unterteils gesetzt.

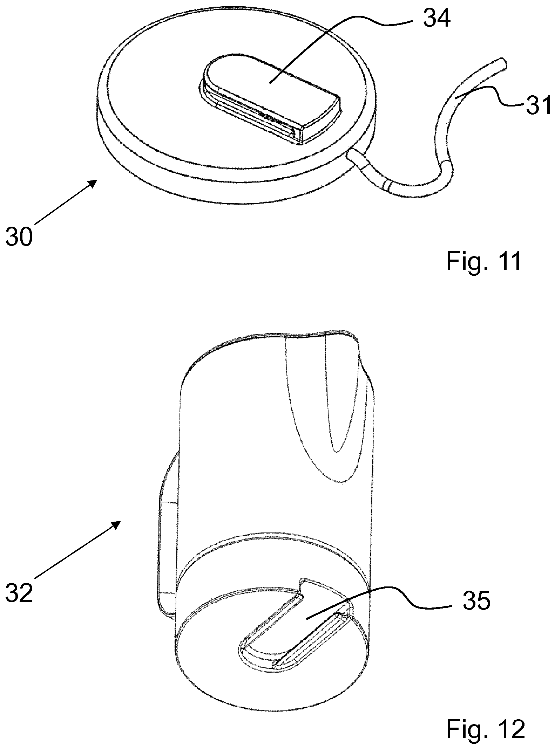

Fig. 11 zeigt in einer perspektivischen Ansicht den Einsatz 30.

Der Einsatz 30 ist als Platte ausgebildet.

Der Elektroanschluss 34 ist als Schiene ausgebildet, welche auf der Oberseite des Einsatzes 30 von einem mittigen Bereich ausgehend sich radial erstreckt, vorzugsweise in Richtung der elektrischen Anschlussleitung 31.

Die elektrischen Kontakte befinden sich vorzugsweise in einem randseitigen Schlitz des als Schiene ausgebildeten Elektroanschlusses 34.

In einer alternativen, hier nicht dargestellten Ausführungsform wird der Wasserkocher 32 seitlich über eine Steckverbindung kontaktiert.

Der in Fig. 12 in einer perspektivischen Darstellung gezeigte Wasserkocher umfasst einen als komplementäre eingesenkte Schiene ausgebildeten Elektroanschluss 35.

So kann der Wasserkocher 32 von einer Seite her auf den Einsatz 30 geschoben werden. Die als Schienen ausgebildeten Elektroanschlüsse 34, 35 greifen dabei ineinander. Zum Aufsetzen des Wasserkochers 32 ist also nur eine horizontale Bewegung erforderlich.

Mit dem Einschieben wird über den Deckel des Wasserkochers 32 das Ventil (20 in Fig. 5) geöffnet, welches den Wasseraufnahmebehälter öffnet und aufbereitetes Trinkwasser in den Wasserkocher 32 eintreten lässt.

Bezugnehmend auf Fig. 13 bis Fig. 17 soll eine Ausführungsform der Erfindung näher erläutert werden, bei welcher die Vorrichtung 1 zum Filtern von Trinkwasser einen Durchlauferhitzer umfasst.

Statt eines Durchlauferhitzers oder zusätzlich zu einem Durchlauferhitzer kann auch ein Wasserkühler in gleicher Weise in der Vorrichtung integriert sein (nicht dargestellt).

Fig. 13 ist eine perspektivische Ansicht einer Vorrichtung 1 zum Filtern von Trinkwasser.

Die Vorrichtung 1 zum Filtern von Trinkwasser umfasst eine Basisstation 2, in welche ein Wassersammelbehälter, in diesem Beispiel die Karaffe 16, einsetzbar ist.

Die Basisstation 2 umfasst das Unterteil 3, in welches der Wassersammelbehälter eingesetzt wird.

Weiter umfasst die Basisstation 2 einen abnehmbaren Wasseraufnahmebehälter 4.

Der abnehmbare Wasseraufnahmebehälter 4 umfasst einen Griff 8, welcher klappbar ausgebildet ist und mit welchem dieser zum Befüllen vom Unterteil 3 abgenommen werden kann.

Im Unterschied zu den zuvor dargestellten Ausführungsformen umfasst in diesem Ausführungsbeispiel der Deckel 5 einen Griff 36 zum Öffnen des Deckels. Mit dem Griff lässt sich eine Hälfte des Deckels 5 hochklappen, um den Wasseraufnahmebehälter 4 zu befüllen.

Im Unterschied zu den zuvor dargestellten Ausführungsbeispielen ist des Weiteren zwischen Wasseraufnahmebehälter 4 und Wassersammelbehälter ein Durchlauferhitzer 37 vorhanden.

Der Durchlauferhitzer 37 ist in diesem Ausführungsbeispiel auf das Unterteil 3 der Basisstation aufgesetzt, auf welches der Wasseraufnahmebehälter 4 aufgesetzt ist. Der Durchlauferhitzer 37 ist also in dem Unterteil 3 integriert.

Fig. 14 ist eine Seitenansicht der in Fig. 13 dargestellten Vorrichtung 1 zum Filtern von Trinkwasser.

Zu erkennen ist insbesondere, dass, entsprechend den zuvor dargestellten Ausführungsbeispielen, der Wassersammelbehälter, also die Karaffe 16, in eine zwischen zwei Seitenwänden 10 des Unterteils 3 liegende Ausnehmung eingesetzt werden kann.

Fig. 15 ist eine Schnittansicht entlang der Linie A-A der Fig. 14.

In der Schnittansicht zu erkennen ist, dass der Wassersammelbehälter 4, welcher mit dem Durchlauferhitzer 37 verbunden ist, einen Trichter aufweist, in welchen die Filterkartusche 23 eingesetzt ist.

Der Wasseraufnahmebehälter 4 stellt ein Innenvolumen 22 bereit, von welchem ausgehend das aufzubereitende Wasser schwerkraftbetrieben die Filterkartusche 23 passiert.

Sodann läuft das Wasser durch den Durchlauferhitzer 37, in welchem es erhitzt wird und sammelt sich im Wassersammelbehälter.

Der Wasseraufnahmebehälter 4 vom Unterteil 3 abnehmbar.

Fig. 16 ist eine Detaildarstellung des Bereichs B der Fig. 15.

Aufzubereitendes Wasser verlässt über den Auslauf 38 die Filterkartusche 23, um in den Durchlauferhitzer 37 einzuströmen.

Eingangsseitig umfasst der Wassersaufnahmebehälter das Ventil 39, welches sich öffnet, wenn der Wasseraufnahmebehälter auf das Unterteil der Basisstation aufgesetzt wird.

Die Heizwendel 40 ist ringförmig ausgebildet und liegt in einer horizontalen Ebene. So kann der Durchlauferhitzer 37 als flach ausgebildetes zylindrisches Kopfstück des Unterteils der Basisstation ausgebildet sein.

Über die Heizwendel 40 wird das Wasser, nachdem es die Filterkartusche 32 verlassen hat, erwärmt und kann in den Wassersammelbehälter laufen.

Auch bei diesem Ausführungsbeispiel ist ein weiteres Ventil 41 vorgesehen, welches Wasser erst dann in den Wassersammelbehälter laufen lässt, wenn dieser, wie hier dargestellt, eingesetzt ist.

In diesem Ausführungsbeispiel wird das Ventil 41 über den verkippbaren Hebel 42, welcher an dem Unterteil angeordnet ist, geöffnet, wenn der Wassersammelbehälter eingesetzt wird.

Der Hebel 42 kann einen Anschlag 43 für den Wassersammelbehälter aufweisen.

Weiter kann der Hebel 42 einen Magnet oder einen ferromagnetischen Abschnitt umfassen, über den ein Magnetschalter im Durchlauferhitzer (nicht dargestellt) aktiviert wird, um den Durchlauferhitzer 37 ein- und auszuschalten.

Dieser Magnet oder ferromagnetische Abschnitt kann insbesondere am Fortsatz 44 oder am Hebel 42 angeordnet sein.

Die Drahtdarstellung gemäß Fig. 17 ist nunmehr der Wasseraufnahmebehälter 4 vom Unterteil 3 der Basisstation abgenommen und kann nunmehr an einer Zapfstelle befüllt werden.

Der Wasseraufnahmebehälter 4 ist eigenständig auf einer Standfläche absetzbar.

In diesem Ausführungsbeispiel umfasst der Wasseraufnahmebehälter 4 mehrere Füße 45, die in eingesetztem Zustand in Ausnehmungen 46 des Unterteils 3 geführt sind.

Durch die Erfindung konnte eine modular aufgebaute, komfortabel zu bedienende Vorrichtung zum Filtern von Trinkwasser bereitgestellt werden.

### Bezugszeichenliste

- 1: Vorrichtung zum Filtern von Trinkwasser
- 2: Basisstation
- 3: Unterteil
- 4: Wasseraufnahmebehälter
- 5: Deckel
- 6: Scharnier
- 7: Wechselanzeige
- 8: Griff
- 9: Kanne
- 10: Seitenwand
- 11: Griff
- 12: Ausgießtülle
- 13: Deckel
- 14: Vorsprung
- 15: Öffnung
- 16: Karaffe
- 17: Kappe
- 18: Aussparung
- 19: Standfläche
- 20: Ventil/Auslauf
- 21: Boden
- 22: Innenvolumen
- 23: Filterkartusche
- 24: Ventilkörper
- 25: Kanal
- 26: Seitenwand
- 27: Standfuß
- 28: Bodenstück
- 29: Standfläche
- 30: Einsatz
- 31: Anschlussleitung
- 32: Wasserkocher
- 33: Sockel
- 34: Elektroanschluss
- 35: Elektroanschluss
- 36: Griff
- 37: Durchlauferhitzer
- 38: Auslauf
- 39: Ventil
- 40: Heizwendel
- 41: Ventil
- 42: Hebel
- 43: Anschlag
- 44: Fortsatz
- 45: Fuß
- 46: Ausnehmung

## Patentansprüche

1. Vorrichtung zum Filtern von Trinkwasser (1), umfassend eine Basisstation (2) mit einem Wasseraufnahmebehälter (4), wobei in den Wasseraufnahmebehälter (4) eine Filterkartusche (23) eingesetzt ist, wobei ein Wassersammelbehälter (9/16) unterhalb des Wasseraufnahmebehälters (4) auf eine Standfläche (19) der Basisstation (2) aufgesetzt ist, wobei die Basisstation (2) eine Seitenwand (26) mit zumindest einer Aussparung (18) aufweist, durch welche der Wassersammelbehälter (9/16) einsetzbar ist,
**dadurch gekennzeichnet, dass** der Wasseraufnahmebehälter (4) mit einem Ventil (20) verschließbar ist, welches durch Einsetzen des Wassersammelbehälters (9/16) von einem Deckel (5) des Wassersammelbehälters (9/16) geöffnet wird, und dass der Wasseraufnahmebehälter (4) zumindest abschnittsweise als Trichter ausgebildet ist, in welchen die Filterkartusche (23) dichtend eingesetzt ist, so dass das aufzubereitende Trinkwasser eingefüllt in den Wasseraufnahmebehälter (4) allein schwerkraftbetrieben die Filterkartusche (23) durchläuft,
und wobei der Wasseraufnahmebehälter (4) einschließlich des Ventils (20) von der Basisstation (2) abnehmbar ist, wobei der Wasseraufnahmebehälter (4) einschließlich des Ventils (20) als eigenständiger abnehmbare Komponente ausgebildet ist, welche einen Griff (8) aufweist, mittels dessen der Benutzer den Wasseraufnahmebehälter (4) abnehmen kann (Abs. 21) und wobei der Wasseraufnahmebehälter (4) eine eigene Standfläche aufweist, so dass dieser hingestellt werden kann, ohne dass das Ventil (20) geöffnet wird.

2. Vorrichtung nach Anspruch 1, **dadurch gekennzeichnet, dass** der Wassersammelbehälter (9/16) als Wasserkocher (32) ausgebildet ist und die Basisstation (2) einen Elektroanschluss (34) für dem Wasserkocher (32) aufweist.

3. Vorrichtung nach dem vorstehenden Anspruch, **dadurch gekennzeichnet, dass** der Elektroanschluss (34) Teil eines die Basisstation (2) einsetzbaren Einsatzes ist.

4. Vorrichtung nach dem vorstehenden Anspruch, **dadurch gekennzeichnet, dass** der Einsatz (30) als auf die Standfläche (19) aufsetzbare Platte ausgebildet ist, wobei die Platte vorzugsweise formschlüssig auf der Standfläche (19) gehalten wird.

5. Set, umfassend eine Vorrichtung nach einem der vorstehenden Ansprüche sowie zumindest zwei verschiedene Wassersammelbehälter (9/16), insbesondere eine Karaffe (16) und eine Kanne (9).

## Claims

1. A device for filtering drinking water (1),
comprising a base station (2) with a water receiving container (4), wherein a filter cartridge (23), which is filled with an ion exchange material and/or activated carbon, is inserted into the water receiving container (4), wherein a water collection container (9/16) below the water receiving container (4) is placed on a stand area (19) of the base station (2),
wherein the base station (2) has a side wall (26) with at least one recess (18), through which the water collection container (9/16) can be inserted,
**characterized in that** the water receiving container (4) can be closed by means of a valve (20), which is opened by a cover (5) of the water collection container (9/16) by inserting the water collection container (9/16),
and that the water receiving container (4) is formed at least in sections as funnel, into which the filter cartridge (23) is inserted so as to form a seal, so that the drinking water to be treated, filled into the water receiving container (4), passes through the filter cartridge (23) so as to be solely driven by gravity, and wherein the water receiving container (4) including the valve (20) can be removed from the base station (2), and wherein the water receiving container (4), including the valve (20), is designed as a separate, removable component that comprises a handle (8) by means of which the user can remove the water receiving container (4).

2. The device according to claim 1, **characterized in that** the water collection container (9/16) is formed as kettle (32) and the base station (2) has an electrical connection (34) for the kettle (32).

3. The device according to the preceding claim, **characterized in that** the electrical connection (34) is part of an insert, which can be inserted in the base station (2).

4. The device according to the preceding claim, **characterized in that** the insert (30) is formed as plate, which can be placed onto the stand area (19), wherein the plate is preferably held in a positive manner on the stand area (19).

5. A set, comprising a device according to any one of the preceding claims, as well as at least two different water collection containers (9/16), in particular a carafe (16) and a jug (9).

## Revendications

1. Dispositif pour filtrer l'eau potable (1), comprenant une station de base (2) avec un
réservoir récepteur d'eau (4), une cartouche filtrante (23) , qui est remplie d'un matériau échangeur d'ions et/ou de charbon actif, étant insérée dans le réservoir récepteur d'eau (4), un réservoir collecteur d'eau (9/16) étant placé sous le réservoir récepteur d'eau (4) sur une surface d'appui (19) de la station de base (2), la station de base (2) présentant une paroi latérale (26) avec au moins un évidement (18) par lequel le réservoir collecteur d'eau (9/16) peut être inséré,
**caractérisé en ce que** le
réservoir récepteur d'eau (4) peut être fermé par une vanne (20) qui s'ouvre par un couvercle (5) du réservoir collecteur d'eau (9/16) en insérant le réservoir collecteur d'eau (9/16),
et **en ce que** le réservoir récepteur d'eau (4) est conçu, au moins par sections, sous forme d'entonnoir dans lequel la cartouche filtrante (23) est insérée de manière étanche, de sorte que l'eau potable à traiter, versée dans le réservoir récepteur d'eau (4), traverse la cartouche filtrante (23) uniquement par gravité, et le réservoir récepteur d'eau (4), avec la vanne (20), pouvant être enlevé de la station de base (2),
et en le réservoir récepteur d'eau (4), y compris la vanne (20), étant conçu comme un composant autonome amovible, muni d'une poignée (8) grâce à laquelle l'utilisateur peut retirer le réservoir récepteur d'eau (4).

2. Dispositif selon la revendication 1, **caractérisé en ce que**
le réservoir collecteur d'eau (9/16) est conçu comme une bouilloire (32) et la station de base (2) présente un raccordement électrique (34) pour la bouilloire (32).

3. Dispositif selon la revendication précédente, **caractérisé en ce que** le raccordement électrique (34) fait partie d'un élément insérable dans la station de base (2).

4. Dispositif selon la revendication précédente, **caractérisé en ce que** l'élément (30) est conçu comme une plaque pouvant être posée sur la surface d'appui (19), la plaque étant de préférence maintenue par complémentarité de forme sur la surface d'appui (19).

5. Ensemble comprenant un dispositif selon l'une des revendications précédentes ainsi qu'au moins deux différents réservoirs collecteurs d'eau (9/16), notamment une carafe (16) et un pot (9).
